(19) Europäisches Patentamt / European Patent Office / Office européen des brevets

(11) **EP 3 951 312 A1**

(12) **EUROPEAN PATENT APPLICATION**
published in accordance with Art. 153(4) EPC

(43) Date of publication:
**09.02.2022 Bulletin 2022/06**

(21) Application number: **20779206.0**

(22) Date of filing: **18.03.2020**

(51) International Patent Classification (IPC):
**G01B 11/24** (2006.01)    **G01B 11/30** (2006.01)
**G06T 7/586** (2017.01)

(52) Cooperative Patent Classification (CPC):
**G01B 11/24; G01B 11/30; G06T 7/586**

(86) International application number:
**PCT/JP2020/012131**

(87) International publication number:
**WO 2020/196196 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2019 JP 2019059195**

(71) Applicant: **Sony Group Corporation**
**Tokyo 108-0075 (JP)**

(72) Inventors:
• **KURITA, Teppei**
**Tokyo 108-0075 (JP)**
• **GOMI, Shinichiro**
**Tokyo 108-0075 (JP)**

(74) Representative: **D Young & Co LLP**
**120 Holborn**
**London EC1N 2DY (GB)**

(54) **IMAGE PROCESSING DEVICE, IMAGE PROCESSING METHOD, AND IMAGE PROCESSING PROGRAM**

(57)    An image processing apparatus according to the present discloser is an image processing apparatus having a cylindrical portion placed between a sensor configured to capture an image of a target and the target, the image processing apparatus including an acquisition section configured to acquire a first image obtained from reflected light of light irradiating the target from a point light source and a second image obtained from reflected light of light irradiating the target from a light source other than the point light source, and a calculation section configured to calculate shape information that is information regarding a surface shape of the target on the basis of a length of the cylindrical portion, the first image, and the second image.

FIG. 1

**Description**

TECHNICAL FIELD

The present disclosure relates to an image processing apparatus, an image processing method, and an image processing program. Specifically, the present disclosure relates to image acquisition processing and calculation processing in a microscope that is an example of the image processing apparatus.

BACKGROUND ART

Microscopes that can be introduced at relatively low cost and perform easy measurement are widely used as apparatuses for observing a fine state of an object.

As a technology related to microscopes, there is known a technique for analyzing a color and a blot on a skin surface by using a difference in an incident angle from an illumination unit (for example, Patent Document 1). Additionally, there is known a technique for reducing defocusing and distortion in imaging of a skin surface by transparent glass disposed at a predetermined distance from a tip dome of a microscope (for example, Patent Document 2).

CITATION LIST

PATENT DOCUMENT

Patent Document 1: Japanese Patent Application Laid-Open No. H10-333057
Patent Document 2: Japanese Patent Application Laid-Open No. 2008-253498

SUMMARY OF THE INVENTION

PROBLEMS TO BE SOLVED BY THE INVENTION

The conventional techniques can improve quality of an image captured by a microscope.

However, the conventional techniques merely improve the quality of a planar image, and it is difficult to obtain a 3D image in which a minute shape (unevenness) of an object is reproduced. Note that contactless 3D measurement equipment, a 3D scanner, and the like are used as apparatuses for measuring a minute shape of an object. However, there is a problem that introduction of such an apparatus relatively increases a cost. Furthermore, a ranging apparatus by a time of flight (ToF) method is relatively inexpensive, but is insufficiently accurate in some cases.

Therefore, the present disclosure proposes an image processing apparatus, an image processing method, and an image processing program capable of performing highly accurate shape measurement with a simple configuration.

SOLUTIONS TO PROBLEMS

In order to solve the above problem, a mode of an image processing apparatus according to the present disclosure is an image processing apparatus having a cylindrical portion placed between a sensor configured to capture an image of a target and the target, the image processing apparatus including an acquisition section configured to acquire a first image obtained from reflected light of light irradiating the target from a point light source and a second image obtained from reflected light of light irradiating the target from a light source other than the point light source, and a calculation section configured to calculate shape information that is information regarding a surface shape of the target on the basis of a length of the cylindrical portion, the first image, and the second image.

BRIEF DESCRIPTION OF DRAWINGS

Fig. 1 is a view illustrating a structure of an image processing apparatus according to a first embodiment.
Fig. 2 is a diagram for explaining calculation processing according to the first embodiment.
Fig. 3 is a view illustrating an external structure of a head mount portion according to the first embodiment.
Fig. 4 is a view illustrating an internal structure of the head mount portion according to the first embodiment.
Fig. 5 is a diagram for explaining a situation in which a target is irradiated by light from a point light source.

Fig. 6 is a diagram for explaining a situation in which the target is irradiated by ambient light.

Fig. 7 is a processing block diagram illustrating a flow of image processing according to the first embodiment.

Fig. 8 is a processing block diagram illustrating a flow of the calculation processing according to the first embodiment.

Fig. 9 is a diagram for explaining the calculation processing according to the first embodiment.

Fig. 10 is a diagram illustrating a configuration example of the image processing apparatus according to the first embodiment.

Fig. 11 is a flowchart illustrating a flow of the processing according to the first embodiment.

Fig. 12 is a view illustrating a structure of a head mount portion according to a second embodiment.

Fig. 13 is a diagram for explaining a situation in which the target is irradiated by a wide-range light source in the second embodiment.

Fig. 14 is a flowchart illustrating a flow of processing according to the second embodiment.

Fig. 15 is a view illustrating a structure of a head mount portion according to a third embodiment.

Fig. 16 is a diagram for explaining a situation in which the target is irradiated by a point light source in the third embodiment.

Fig. 17 is a view illustrating a structure of a head mount portion according to a fourth embodiment.

Fig. 18 is a diagram for explaining a situation in which the target is irradiated by a point light source in the fourth embodiment.

Fig. 19 is a view illustrating a structure of a head mount portion according to a fifth embodiment.

Fig. 20 is a diagram for explaining a situation in which the target is irradiated by a point light source in the fifth embodiment.

Fig. 21 is a diagram illustrating a configuration example of an information processing system according to the present disclosure.

Fig. 22 is a hardware configuration diagram illustrating an example of a computer that realizes functions of the image processing apparatus.

MODE FOR CARRYING OUT THE INVENTION

Hereinafter, embodiments of the present disclosure will be described in detail on the basis of the drawings. Note that, in each of the following embodiments, the same parts are denoted by the same reference signs so that repeated description is omitted.

The present disclosure will be described in the following order of items.

1. First Embodiment

1-1. Example of Image Processing According to First Embodiment
1-2. Configuration of Image Processing Apparatus According to First Embodiment
1-3. Procedure of Image Processing According to First Embodiment

2. Second Embodiment
3. Third Embodiment
4. Fourth Embodiment
5. Fifth Embodiment
6. Other Embodiments

6-1. Image Processing System
6-2. Head Mount Portion
6-3. Others

7. Effects of Image Processing Apparatus According to Present Disclosure
8. Hardware Configuration

(1. First Embodiment)

[1-1. Example of Image Processing According to First Embodiment]

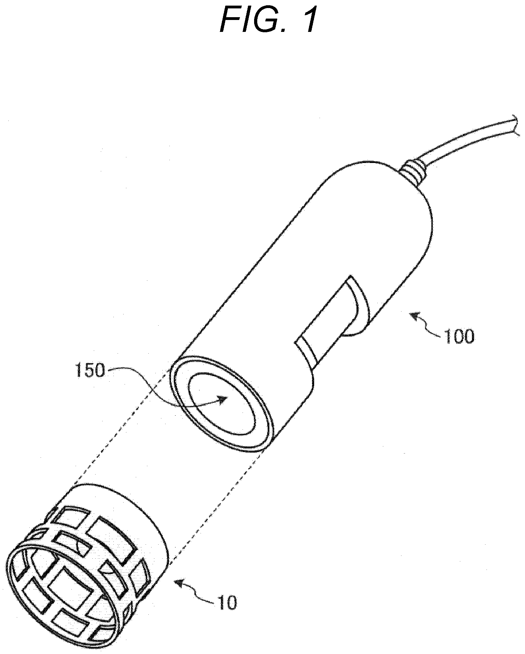

An outline of an image processing apparatus 100 according to a first embodiment will be described with reference to Figs. 1 to 6. First, a structure of the image processing apparatus 100 according to the first embodiment will be described with reference to Fig. 1. Fig. 1 is a view illustrating the structure of the image processing apparatus 100 according to the first embodiment.

As illustrated in Fig. 1, the image processing apparatus 100 is an imaging apparatus that is used by a user holding it in hand and turning a sensor 150 to an imaging target, and is generally referred to as a microscope. Note that the sensor 150 may be construed as a lens, a camera, or the like.

The image processing apparatus 100 includes a head mount portion 10 that is a cylindrical mechanism placed between the sensor 150 and the target. The head mount portion 10 is a mechanism mounted on a tip of the image processing apparatus 100, and is also referred to as a tip head or the like. The head mount portion 10 has a structure constituted by various materials. The user brings the head mount portion 10 into contact with the target to image the target. This configuration can prevent failure in adjusting a focus (a focal length) during imaging since a distance between the sensor 150 and the target is fixed.

As illustrated in Fig. 1, the head mount portion 10 according to the first embodiment has an aperture around a side thereof assuming that an imaging target side is a top and an image processing apparatus 100 side is a bottom. Thus, the image processing apparatus 100 can use ambient light incident from surroundings of the head mount portion 10 during imaging. That is, the image processing apparatus 100 can perform imaging by exposure to reflected light when the ambient light irradiates the target.

Furthermore, the image processing apparatus 100 has a mechanism for irradiation by a point light source inside the head mount portion 10, the details of which will be described later. Thus, the image processing apparatus 100 can perform imaging by exposure to reflected light of light irradiating the target from the point light source. That is, the image processing apparatus 100 can acquire, when imaging the target, two types of images that are a first image (hereinafter, referred to as a "point light source image" for distinction) obtained from the reflected light of the light irradiating the target from the point light source and a second image (hereinafter, referred to as an "ambient light image" for distinction) obtained from the reflected light of the light irradiating the target from a light source other than the point light source. Note that the point light source in the present specification ideally means a light source with a form of a point, but includes a light source having an extremely small size (within several millimeters or less, for example) since there can be no light source with a form of a point in reality.

The image processing apparatus 100 calculates a distance to a minute shape of unevenness on a surface of the target on the basis of the acquired two types of images. In other words, the image processing apparatus 100 calculates shape information that is information regarding a surface shape of the target.

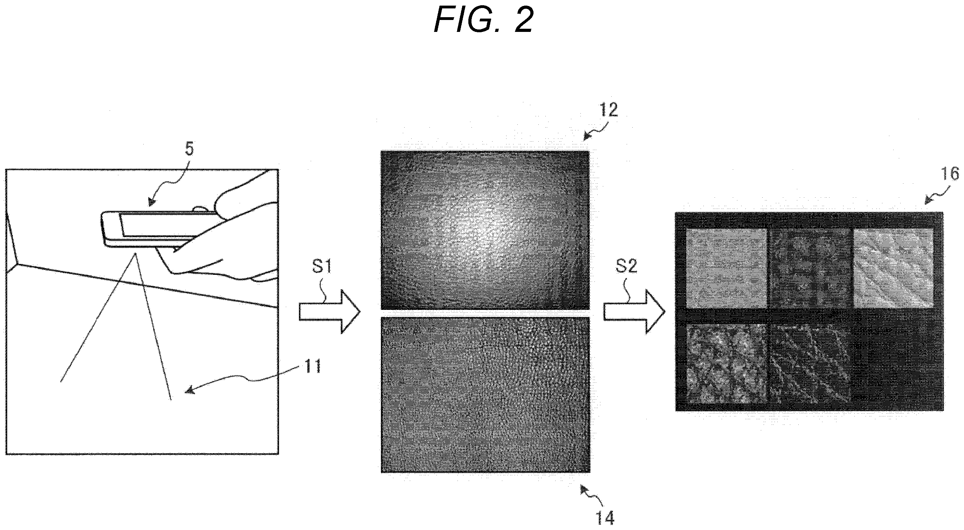

Here, calculation processing executed by the image processing apparatus 100 will be described with reference to Fig. 2. Fig. 2 is a diagram for explaining the calculation processing according to the first embodiment.

The example illustrated in Fig. 2 shows how an imaging apparatus 5 images a target 11 having unevenness on a surface thereof. Note that the imaging apparatus 5 is an information processing terminal capable of executing calculation processing similar to that of the image processing apparatus 100 according to the first embodiment.

The imaging apparatus 5 uses a flash mechanism or the like included in the apparatus to cause light emitted from a point light source to irradiate the target 11 for imaging. In addition, the imaging apparatus 5 uses ambient light to image the target 11 instead of using the flash mechanism or the like included in the apparatus (step S1).

By the processing of step S1, the imaging apparatus 5 obtains a point light source image 12 and an ambient light image 14. The imaging apparatus 5 obtains normal line information on the surface of the target 11 by applying a method called a BRDF fitting method (also referred to as a "two-shot method") to the two images. The reason is that the BRDF fitting method allows for obtaining various parameters including a normal on the surface of the target with one image (the point light source image 12 in this example) in which how the imaging target is irradiated by the light is known and another image (the ambient light image 14 in this example) in which the imaging target is not irradiated by the light source from a specific direction. Note that the BRDF fitting method is described in, for example, a well-known document entitled "Two-Shot SVBRDF Capture for Stationary Materials, Miika Aittala, SIGGRAPH 2015" or the like, and thus, will not be described in detail herein.

When a distance from an image sensor (a lens) of the imaging apparatus 5 to the target 11 is known, it is possible to perform ranging to the surface of the target 11 on the basis of the normal line information, which will be specifically described later. Thus, the imaging apparatus 5 can calculate shape information that is information regarding the surface shape of the target 11 (step S2).

As a result, the imaging apparatus 5 can obtain an image 16 including the shape information of the target 11. The image 16 shown in Fig. 2 conceptually represents various shapes of the target 11 as image data. Such image data includes data of the surface shape of the target 11.

As described above, the imaging apparatus 5 can obtain the shape information of the target 11 by obtaining the two images that are the point light source image 12 obtained by causing the point light source to irradiate the target and the ambient light image 14 obtained from a substantially uniform light source such as the ambient light.

Using the calculation method illustrated in Fig. 2 allows the image processing apparatus 100 to obtain not only two-dimensional information but also three-dimensional information (that is, the shape information) even it is the imaging apparatus of a microscope type.

A microscope often employs a head mount portion uniformly covered with plastic or the like generally for eliminating influence of ambient light and for maintaining strength. Meanwhile, as illustrated in Fig. 1, the image processing apparatus 100 includes the head mount portion 10 provided with the aperture, and thus can capture not only the point light source image but also the ambient light image.

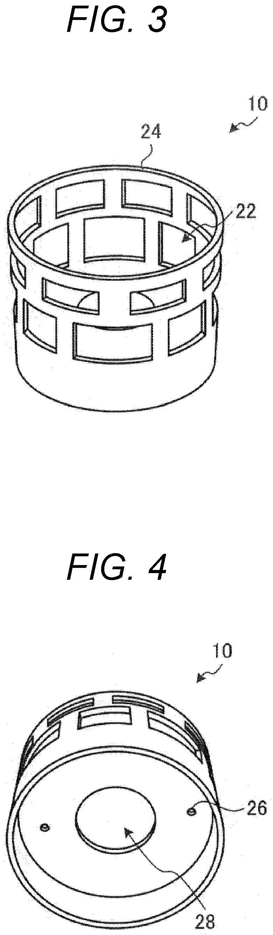

Here, the structure of the head mount portion 10 will be described in detail with reference to Figs. 3 and 4. Fig. 3 is a view illustrating an external structure of the head mount portion 10 according to the first embodiment.

As illustrated in Fig. 3, the head mount portion 10 is constituted by a frame 24 having an aperture 22, instead of having a sealed structure. Note that, in the first embodiment, the head mount portion 10 is desirably constituted by a material having relatively low reflectance and transmittance, for example, black glass, black plastic, or the like. This constitution is for the sake of controlling an incident amount of extra ambient light.

Next, an internal structure of the head mount portion 10 will be described with reference to Fig. 4. Fig. 4 is a view illustrating the internal structure of the head mount portion 10 according to the first embodiment.

As illustrated in Fig. 4, the head mount portion 10 internally has an aperture 26 that is minute in size compared to the head mount portion 10 and an opening 28 corresponding in size to the sensor 150 for imaging. The aperture 26 is, for example, a hole for a light source included in the image processing apparatus 100 to pass through. That is, the image processing apparatus 100 can cause a point light source to emit light to the target 11 by letting the light pass through the aperture 26.

Note that, although Fig. 4 shows an example in which the aperture 26 is provided inside the head mount portion 10, the internal structure of the head mount portion 10 is not limited to this structure. For example, the head mount portion 10 may include a light source itself (for example, a light emitting diode (LED) or the like) instead of the aperture 26. In this case, the light source of the head mount portion 10 is supplied with power from the image processing apparatus 100 to emit light to the target 11.

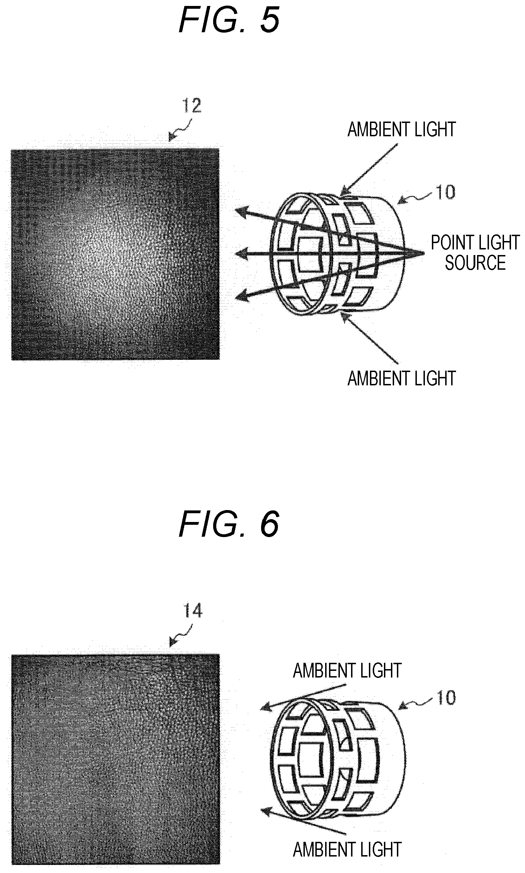

Next, light emitted from the head mount portion 10 will be described with reference to Figs. 5 and 6. Fig. 5 is a diagram for explaining a situation in which the target 11 is irradiated by light from the point light source.

As illustrated in Fig. 5, the head mount portion 10 emits light to the target 11 through the aperture 26. In this case, ambient light passes through the aperture 22 outside the head mount portion 10. However, influence of the ambient light is almost ignorable because of low illuminance thereof compared to the light emitted through the aperture 26. The image processing apparatus 100 can obtain the point light source image 12 by adjusting exposure under the light emitted through the aperture 26 and imaging the target 11.

Furthermore, the image processing apparatus 100 can obtain an image other than the point light source image 12 by imaging with the point light source off. This point will be described with reference to Fig. 6. Fig. 6 is a diagram for explaining a situation in which the target 11 is irradiated by the ambient light.

As illustrated in Fig. 6, in a case where no light is emitted from the point light source through the head mount portion 10, the target 11 is irradiated by the ambient light entering from the aperture 22 outside the head mount portion 10. The image processing apparatus 100 can obtain the ambient light image 14 by adjusting exposure under the ambient light emitted through the aperture 22 and imaging the target 11.

As described above, the image processing apparatus 100 can acquire the two types of images that are the point light source image 12 and the ambient light image 14 by using the head mount portion 10 that enables the point light source to emit light from the inside while letting the ambient light enter from the aperture 22. As described above, the image processing apparatus 100 can calculate the surface shape of the target 11 using the two types of images.

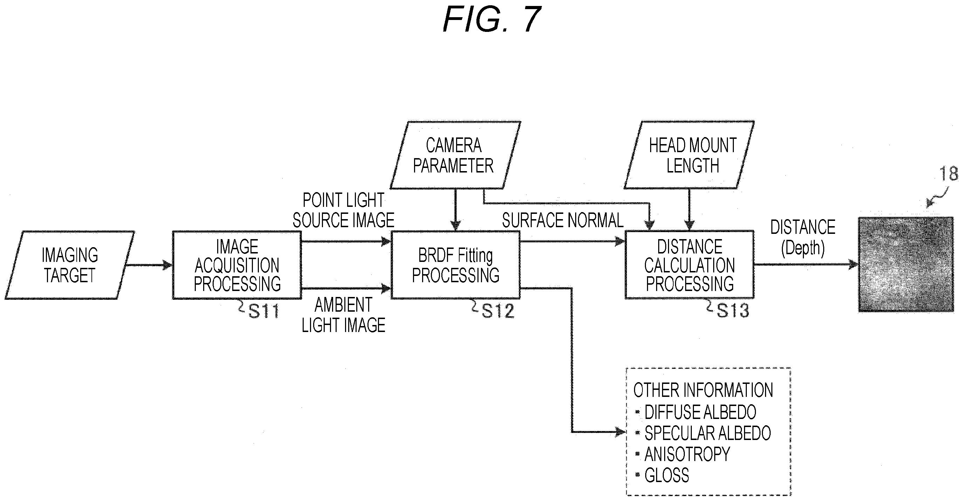

Next, processing for calculating the shape of the target 11 will be described in detail with reference to Figs. 7 to 9. Fig. 7 is a processing block diagram illustrating a flow of image processing according to the first embodiment.

As illustrated in Fig. 7, the image processing apparatus 100 executes image acquisition processing on the imaging target (for example, the target 11 shown in Fig. 2) (step S11). Specifically, as illustrated in Figs. 5 and 6, the image processing apparatus 100 obtains the point light source image 12 and the ambient light image 14 using the point light source and the ambient light.

Subsequently, the image processing apparatus 100 performs the above-described BRDF fitting processing using the two images and a camera parameter (step S12). Note that the camera parameter includes, for example, a focal length and the like.

By the processing of step S12, the image processing apparatus 100 obtains information regarding a surface normal of the imaging target. Additionally, the image processing apparatus 100 can also obtain information other than the surface normal (for example, information diffuse albedo, specular albedo, anisotropy, gloss, and the like of the target) by the processing of step S12.

Thereafter, the image processing apparatus 100 executes processing for calculating the distance to the surface of the target on the basis of the surface normal, the camera parameter, and a head mount length (step S13).

This procedure allows the image processing apparatus 100 to calculate depth information (DEPTH), that is, the distance to the surface of the target, and thus, to generate an image 18 including surface shape information.

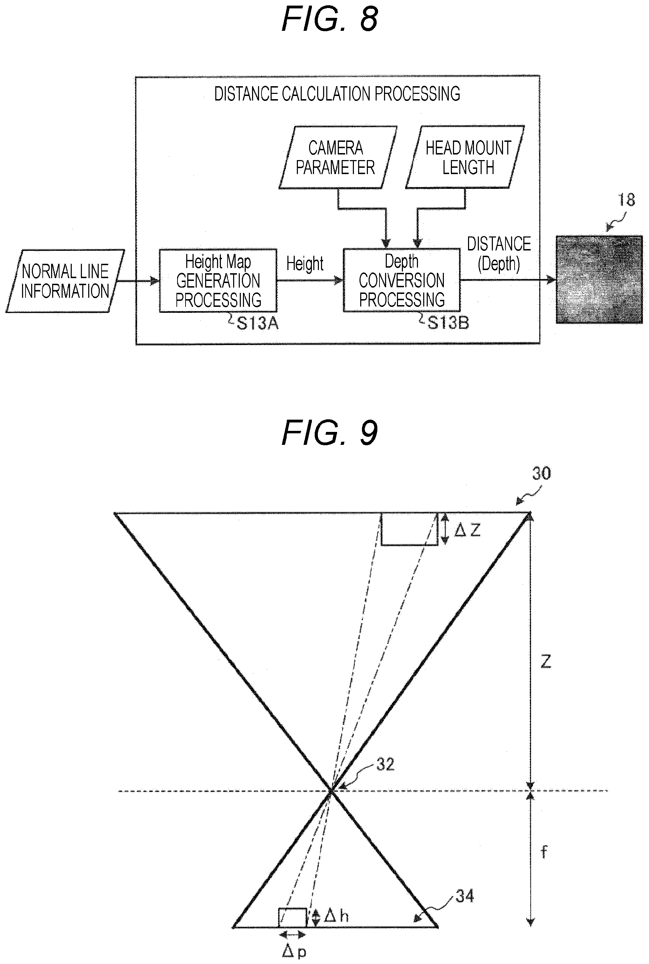

Next, the distance calculation processing of step S13 will be described in detail with reference to Fig. 8. Fig. 8 is a processing block diagram illustrating a flow of the calculation processing according to the first embodiment.

As illustrated in Fig. 8, the image processing apparatus 100 executes height map generation processing using the normal line information obtained in step S12 (step S13A). In the height map generation processing, height information is added to a texture of the surface of the target on the basis of the normal line information. Various known methods may be used for the height map generation. For example, the image processing apparatus 100 generates a height map on the basis of following expression (1).

[Math. 1]

$$W = \iint_{\Omega} \left( |Z_x - p|^2 + |Z_y - q|^2 \right) dxdy \quad \cdots (1)$$

Above expression (1) gives a calculation result W if respective values of p, q, and Z can be evaluated. Note that the normal line information obtained in step S12 is assigned to p and q. p and q are represented by following expressions (2) and (3), respectively. Note that x and y represent coordinates.

[Math. 2]

$$p(x,y) = \frac{\partial Z(x,y)}{\partial x} Z_x \quad \cdots (2)$$

[Math. 3]

$$q(x,y) = \frac{\partial Z(x,y)}{\partial y} Z_y \quad \cdots (3)$$

Here, in order to obtain Z, the discrete Fourier transform is applied to above expression (1), resulting in following expression (4). Note that M and N in following expression (4) represent a width and a height of an image that is a processing target. Furthermore, rearranging following expression (4) gives following expressions (5), (6), and (7).

[Math. 4]

$$\sum_{v=0}^{N-1}\sum_{u=0}^{M-1} \left( \left| j\frac{2\pi}{M} uZ_F(u,v) - P(u,v) \right|^2 + \left| j\frac{2\pi}{N} vZ_F(u,v) - Q(u,v) \right|^2 \right) \quad \cdots (4)$$

[Math. 5]

$$\sum_{v=0}^{N-1}\sum_{u=0}^{M-1} \left( \frac{4\pi^2}{M^2} u^2 Z_F Z_F^* - j\frac{2\pi}{M} uZ_F P^* + j\frac{2\pi}{M} uZ_F^* P + PP^* \right.$$
$$\left. + \frac{4\pi^2}{N^2} v^2 Z_F Z_F^* - jv\frac{2\pi}{N} Z_F Q^* + jv\frac{2\pi}{N} Z_F^* Q + QQ^* \right) \quad \cdots (5)$$

[Math. 6]

$$4\pi^2 \left( \frac{u^2}{M^2} + \frac{v^2}{N^2} \right) Z_F + j\frac{2\pi}{M} uP + j\frac{2\pi}{N} vQ = 0 \quad \cdots (6)$$

[Math. 7]

$$4\pi^2\left(\frac{u^2}{M^2}+\frac{v^2}{N^2}\right)Z_F^* - j\frac{2\pi}{M}uP^* - j\frac{2\pi}{N}vQ^* = 0 \qquad \cdots (7)$$

The inverse Fourier transform finally gives following expression (8) from above expressions (5) to (7) .

[Math. 8]

$$Z_F(u,v) = \frac{-j\dfrac{u}{M}P(u,v) - j\dfrac{v}{N}Q(u,v)}{2\pi\left(\dfrac{u^2}{M^2}+\dfrac{v^2}{N^2}\right)} \qquad \cdots (8)$$

That is, the image processing apparatus 100 can obtain the height information (HEIGHT) of the imaging target by obtaining the normal line information.

Thereafter, the image processing apparatus 100 acquires the information of the camera parameter and the head mount length, and executes DEPTH conversion processing on the obtained HEIGHT (step S13B). This point will be described with reference to Fig. 9.

Fig. 9 is a diagram for explaining the calculation processing according to the first embodiment. Fig. 9 is a diagram schematically illustrating a relationship between an image sensor 34 and a subject 30. In Fig. 9, a focal length f indicates a distance from the image sensor 34 to a focal position 32. The focal length f can be obtained from the camera parameter. Furthermore, a distance Z from the focal position 32 to the subject 30 corresponds to the head mount length, and thus is a known value. The distance Z is represented by, for example, following expression (9) from the relationship illustrated in Fig. 9.

[Math. 9]

$$H = \Delta h / \Delta p \qquad \cdots (9)$$

In above expression (9), H corresponds to a value of the height map obtained in step S13A. Furthermore, Δp is a length per pixel of the image sensor, and is a known value. Here, following expression (10) holds from the geometric relationship illustrated in Fig. 9.

[Math. 10]

$$\Delta Z = \Delta h \times Z / f \qquad \cdots (10)$$

Rearranging above expressions (9) and (10) and eliminating Δh gives following expression (11).

[Math. 11]

$$\Delta Z = H \times \Delta p \times Z / f \qquad \cdots (11)$$

As shown in above expression (11), ΔH can be obtained from the known values of H, Δp, the distance Z, and the focal length f. As illustrated in Fig. 9, ΔH is a numerical value for expressing a surface shape of the subject 30. That is, such a method allows the image processing apparatus 100 to calculate surface shape information of the subject 30.

Return to Fig. 8 to continue the description. The image processing apparatus 100 generates the image 18 including the surface shape information on the basis of the surface shape information obtained in step S13B.

As described above, the image processing apparatus 100 according to the first embodiment includes the head mount portion 10 placed between the sensor 150 configured to capture an image of the target and the target. In addition, the image processing apparatus 100 acquires the point light source image obtained from the reflected light of the light irradiating the target from the point light source and the ambient light image obtained from the reflected light of the light irradiating the target from the light source other than the point light source (for example, the ambient light). Moreover, the image processing apparatus 100 calculates the shape information that is information regarding the surface shape of the target on the basis of the head mount length, the point light source image, and the ambient light image.

As described above, the image processing apparatus 100 can calculate not only the two-dimensional information but also the three-dimensional information of the surface shape by acquiring the two types of images that are the point light source image and the ambient light image when capturing an image with the head mount portion 10 in contact with the target. Therefore, the image processing apparatus 100 can perform highly accurate shape measurement with a simple configuration and by a simple imaging method like a so-called microscope.

[1-2. Configuration of Image Processing Apparatus According to First Embodiment]

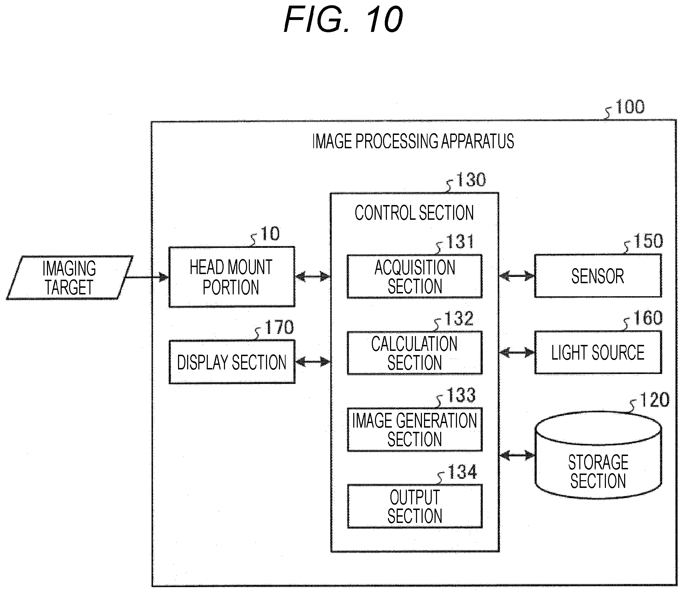

Next, a configuration of the image processing apparatus 100 that executes the image processing and the head mount portion 10 included in the image processing apparatus 100, which have been described with reference to Figs. 1 to 9, will be described in detail with reference to Fig. 10.

Fig. 10 is a diagram illustrating a configuration example of the image processing apparatus 100 according to the first embodiment. As illustrated in Fig. 10, the image processing apparatus 100 includes the head mount portion 10, a storage section 120, a control section 130, the sensor 150, a light source 160, and a display section 170. Note that Fig. 10 shows a functional configuration, and a hardware configuration may be different from this configuration. Furthermore, functions of the image processing apparatus 100 may be implemented in a distributed manner in a plurality of physically separated apparatuses.

Additionally, although not illustrated, the image processing apparatus 100 may include an input section for receiving various operations from a user who uses the image processing apparatus 100. The input section receives, for example, operations of start, end, and the like for an imaging operation by the user.

Additionally, the image processing apparatus 100 may include a communication section for communicating with another apparatus and the like. The communication section is realized by, for example, a network interface card (NIC) or the like. The communication section may be a universal serial bus (USB) interface including a USB host controller, a USB port, and the like. Furthermore, the communication section may be a wired interface or a wireless interface. For example, the communication section may be a wireless communication interface of a wireless LAN system or a cellular communication system. The communication section functions as a communication means or a transmission means of the image processing apparatus 100. For example, the communication section 110 is connected to a network in a wired or wireless manner, and transmits and receives information to and from another information processing terminal or the like via the network.

The head mount portion 10 is a cylindrical mechanism placed between the sensor 150 that captures an image of the target and the target.

As illustrated in Fig. 3, the head mount portion 10 according to the first embodiment includes the aperture 22 and the frame 24. In addition, as illustrated in Fig. 4, the head mount portion 10 has the aperture 26 that serves as a point light source in the inside bottom.

That is, the head mount portion 10 includes the aperture 26 provided in the bottom for light to irradiate the target from the light source, and the aperture 22 provided in the side. This structure allows the head mount portion 10 to cause the light from the point light source to irradiate the target, and to cause only the ambient light to irradiate the target with the point light source off.

Note that the head mount portion 10 may include the light source 160 instead of the aperture 26 shown in Fig. 4. In this case, the head mount portion 10 includes the light source 160 that is comparable in size to the aperture 26 shown in Fig. 4, and can cause it to emit the light to the target.

Furthermore, as illustrated in Fig. 3, the head mount portion 10 preferably includes a plurality of the apertures 22 provided at substantially the same intervals in the side. This configuration allows the head mount portion 10 to uniformly take in the ambient light without biased distribution thereof in a specific spot. As a result, a below-described acquisition section 131 can obtain an image of the target irradiated by the uniform light, and thus can acquire the ambient light image to be compared with the point light source image.

The storage section 120 is realized by, for example, a semiconductor memory element such as a random access memory (RAM) or a flash memory, or a storage device such as a hard disk or an optical disk. The storage section 120 stores various types of data.

For example, the storage section 120 temporarily stores, for the image processing according to the present disclosure, the point light source image and the ambient light image obtained by imaging. Additionally, the storage section 120 may store various parameters used for the calculation processing according to the present disclosure, such as the camera parameter and the head mount length.

The sensor 150 detects various types of information. Specifically, the sensor 150 is an image sensor having a function of capturing an image of the target, and may be construed as a camera.

Note that the sensor 150 may detect environment information around the image processing apparatus 100, position information of the image processing apparatus 100, information regarding equipment connected to the image processing apparatus 100, and the like.

Additionally, the sensor 150 may include an illuminance sensor that detects illuminance around the image processing apparatus 100, a humidity sensor that detects humidity around the image processing apparatus 100, a geomagnetic sensor that detects a magnetic field at a position of the image processing apparatus 100, and the like.

The light source 160 includes a light source and a control circuit that controls on/off of the light source provided in the image processing apparatus 100 or the head mount portion 10 to irradiate the target. The light source 160 is realized by, for example, an LED or the like.

The control section 130 is realized by, for example, a central processing unit (CPU), a micro processing unit (MPU), a graphics processing unit (GPU), or the like executing a program (for example, an image processing program according to the present disclosure) stored in the image processing apparatus 100 using a random access memory (RAM) or the like as a work area. Alternatively, the control section 130 is a controller, and may be realized by, for example, an integrated circuit such as an application specific integrated circuit (ASIC) or a field programmable gate array (FPGA).

As illustrated in Fig. 10, the control section 130 includes the acquisition section 131, a calculation section 132, an image generation section 133, and an output section 134, and realizes or executes functions and behaviors of information processing described below. Note that an internal configuration of the control section 130 is not limited to the configuration illustrated in Fig. 10, and it may have another configuration in which the below-described information processing is performed.

The acquisition section 131 acquires various types of information. For example, the acquisition section 131 acquires an image captured by the sensor 150 included in the image processing apparatus 100.

For example, the acquisition section 131 acquires the first image (for example, the point light source image 12 shown in Fig. 5) obtained from the reflected light of the light irradiating the target from the point light source and the second image (for example, the ambient light image 14 shown in Fig. 6) obtained from the reflected light of the light irradiating the target from the light source other than the point light source.

Specifically, the acquisition section 131 acquires the ambient light image obtained from the reflected light of the ambient light incident from the aperture 22 provided in the side of the head mount portion 10.

Furthermore, the acquisition section 131 acquires the point light source image obtained from the reflected light of the light irradiating the target from the point light source (the light source 160) provided in the head mount portion 10 in a case where the light source 160 is provided not in the image processing apparatus 100 but in the head mount portion 10.

The acquisition section 131 stores the acquired information in the storage section 120 as appropriate. Additionally, the acquisition section 131 may acquire information required for the processing from the storage section 120 as appropriate. Furthermore, the acquisition section 131 may acquire information required for the processing (the camera parameter, the head mount length, and the like) through the sensor 150 or the input section, or may acquire various types of information from an external apparatus via the network.

The calculation section 132 calculates the distance to the surface of the target on the basis of the information acquired by the acquisition section 131. Specifically, the calculation section 132 calculates the shape information that is information regarding the surface shape of the target on the basis of the head mount length, the first image, and the second image.

The image generation section 133 generates an image including the shape information calculated by the calculation section 132. For example, the image generation section 133 reflects the shape information of the surface of the target on an image captured by the sensor 150, and performs rendering processing to generate the image including the shape information of the target.

The output section 134 outputs various types of information. For example, the output section 134 outputs data of the image generated by the image generation section 133 to the display section 170. Note that the display section 170 is a monitor (a liquid crystal display or the like) provided in the image processing apparatus 100. The output section 134 may output the image data to an external monitor or the like connected to the image processing apparatus 100, instead of outputting the image data to the monitor provided in the image processing apparatus 100.

[1-3. Procedure of Image Processing According to First Embodiment]

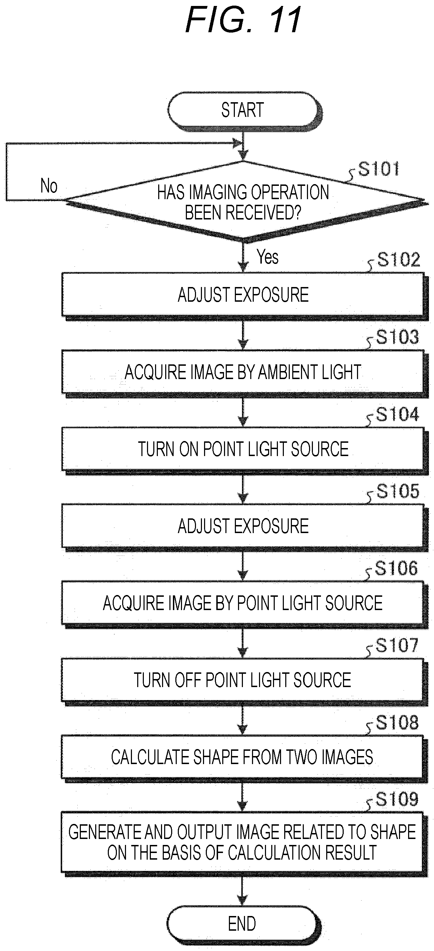

Next, a procedure of the image processing according to the first embodiment will be described with reference to Fig. 11. Fig. 11 is a flowchart illustrating a flow of the processing according to the first embodiment.

As illustrated in Fig. 11, the image processing apparatus 100 determines whether or not an imaging operation has been received from the user (step S101). If no imaging operation has been received (step S101; No), the image processing apparatus 100 stands by until the imaging operation is received.

On the other hand, if the imaging operation has been received (step S101; Yes), the image processing apparatus 100 adjusts exposure for imaging (step S102). Note that, in step S102, the image processing apparatus 100 adjusts exposure with respect to the ambient light with the light source 160 off.

After the exposure adjustment, the image processing apparatus 100 acquires an image by the ambient light (the ambient light image) (step S103). Thereafter, the image processing apparatus 100 stores the acquired ambient light image in the storage section 120, and turns on the point light source (the light source 160) (step S104).

Afterward, the image processing apparatus 100 adjusts exposure with respect to the point light source (step S105). After the exposure adjustment, the image processing apparatus 100 acquires an image by the point light source (the point light source image) (step S106). Thereafter, the image processing apparatus 100 stores the acquired point light source image in the storage section 120, and turns off the point light source (step S107).

Then, as described with reference to Figs. 7 to 9, the image processing apparatus 100 calculates the shape of the target from the acquired two images (step S108). Then, the image processing apparatus 100 generates an image related to the shape (an image including information regarding the shape of unevenness and the like) on the basis of the calculation result, and outputs the generated image to the display section 170 (step S109).

(2. Second Embodiment)

Next, a second embodiment will be described. The first embodiment shows an example in which the plurality of apertures provided in the side of the head mount portion 10 lets in the ambient light and thus the target is irradiated by the uniform light. Here, the image processing apparatus 100 may cause not the ambient light but artificial uniform light to irradiate the target to acquire the second image as an image in which the target is irradiated by uniform light.

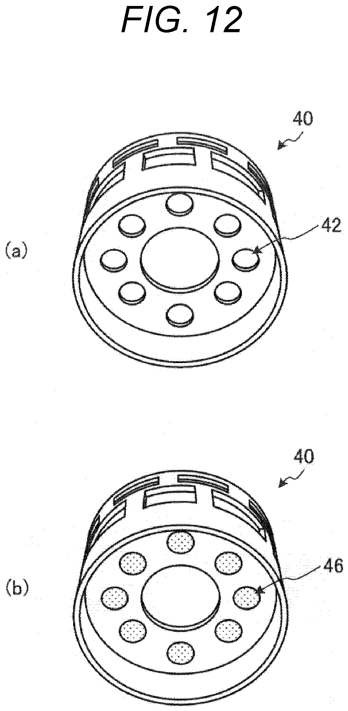

The above point will be described with reference to Fig. 12. Fig. 12 is a view illustrating a structure of a head mount portion 40 according to the second embodiment. As illustrated in (a) of Fig. 12, the head mount portion 40 has a plurality of apertures 42 in a bottom thereof (a face perpendicular to light emitted from a sensor 150 side).

The apertures 42 are open for the light emitted from the light source 160 included in the image processing apparatus 100 to pass through. That is, the head mount portion 40 according to the second embodiment includes the plurality of apertures 42 provided in the bottom for the light to irradiate the target from the light source 160.

In this case, the image processing apparatus 100 includes a plurality of the light sources 160 corresponding one by one to the plurality of apertures 42. Thus, the acquisition section 131 according to the second embodiment acquires the first image (the point light source image) obtained from the reflected light of the light irradiating the target from one of the plurality of apertures 42 and the second image obtained from the reflected light of the light irradiating the target from the plurality of apertures 42 (such an image is referred to as a "wide-range light source image").

That is, the image processing apparatus 100 according to the second embodiment includes a wide-range light source capable of emitting uniform light to the target, instead of taking in the ambient light. Furthermore, the head mount portion 40 includes the plurality of apertures 42, and lets the light emitted from the point light source or the wide-range light source pass through. The image processing apparatus 100 can successively acquire the two types of images by switching between lighting of the point light source (only one of the provided plurality of light sources 160) and lighting of the wide-range light source (for example, all of the provided plurality of light sources 160).

According to the image processing apparatus 100 of the second embodiment, the target can be irradiated by the artificial uniform light in a wide range like the ambient light, and thus the image processing according to the present disclosure can be executed without being affected even under a no-light environment.

Note that the light sources 160 may be provided not in the image processing apparatus 100 but in the head mount portion 40. For example, as illustrated in (b) of Fig. 12, the head mount portion 40 may have a structure provided with a plurality of light sources 46. The light source 46 is a point light source that irradiates the target. In (b) of Fig. 12, there is shown the structure having the plurality of light sources 46 embedded in a ring shape in the head mount portion 40.

In this case, the acquisition section 131 according to the second embodiment acquires the first image (the point light source image) obtained from the reflected light of the light irradiating the target from one of the light sources 46 provided in the head mount portion 40 and the second image (the wide-range light source image) obtained from the reflected light of the light irradiating the target simultaneously from the plurality of light sources 46 provided in the head mount portion 40. Such a configuration also allows the image processing apparatus 100 according to the second embodiment to realize the image processing according to the present disclosure.

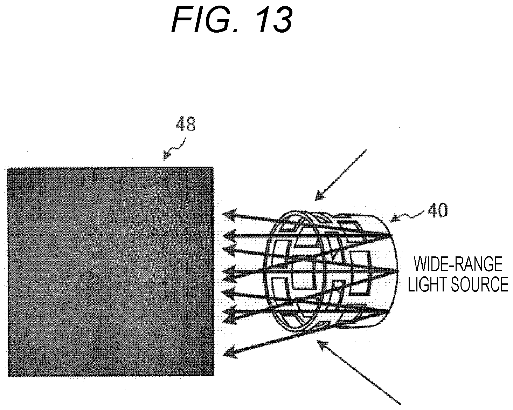

Fig. 13 illustrates a situation in which the target is irradiated by the wide-range light source. Fig. 13 is a diagram for explaining the situation in which the target is irradiated by the wide-range light source in the second embodiment. As illustrated in Fig. 13, the wide-range light source uniformly irradiates the target. This configuration allows the image processing apparatus 100 to acquire a wide-range image 48 as an image in which the target is uniformly irradiated by light (an image similar to the ambient light image 14). Note that the image processing apparatus 100 may acquire (capture) the wide-range image 48 with the ambient light let in as in the first embodiment.

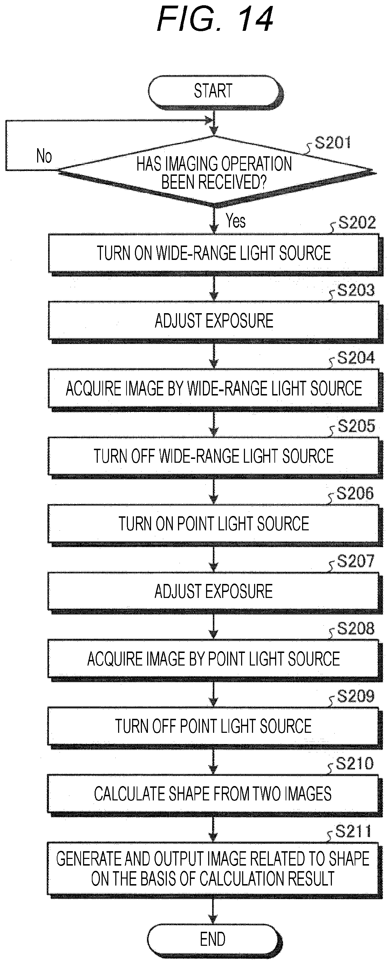

Next, a procedure of the image processing according to the second embodiment will be described with reference to Fig. 14. Fig. 14 is a flowchart illustrating a flow of the processing according to the second embodiment.

As illustrated in Fig. 14, the image processing apparatus 100 determines whether or not an imaging operation has been received from the user (step S201). If no imaging operation has been received (step S201; No), the image processing apparatus 100 stands by until the imaging operation is received.

On the other hand, if the imaging operation has been received (step S201; Yes), the image processing apparatus 100 turns on the wide-range light source (step S202). The image processing apparatus 100 adjusts exposure with respect to the wide-range light source (step S203).

After the exposure adjustment, the image processing apparatus 100 acquires an image by the wide-range light source (the wide-range light source image) (step S204). Thereafter, the image processing apparatus 100 stores the acquired wide-range light source image in the storage section 120, and turns off the wide-range light source (step S205).

Subsequently, the image processing apparatus 100 turns on the point light source (step S206). Afterward, the image processing apparatus 100 adjusts exposure with respect to the point light source (step S207). After the exposure adjustment, the image processing apparatus 100 acquires an image by the point light source (the point light source image) (step S208). Thereafter, the image processing apparatus 100 stores the acquired point light source image in the storage section 120, and turns off the point light source (step S209).

Then, as described with reference to Figs. 7 to 9, the image processing apparatus 100 calculates the shape of the target from the acquired two images (step S210). Then, the image processing apparatus 100 generates an image related to the shape (an image including information regarding the shape of unevenness and the like) on the basis of the calculation result, and outputs the generated image to the display section 170 (step S211).

(3. Third Embodiment)

Next, a third embodiment will be described. The second embodiment shows an example in which the plurality of apertures or light sources provided in the bottom of the head mount portion 40 results in acquisition of the wide-range light source image. Here, the image processing apparatus 100 may have the head mount portion 40 further configured to eliminate influence of the ambient light.

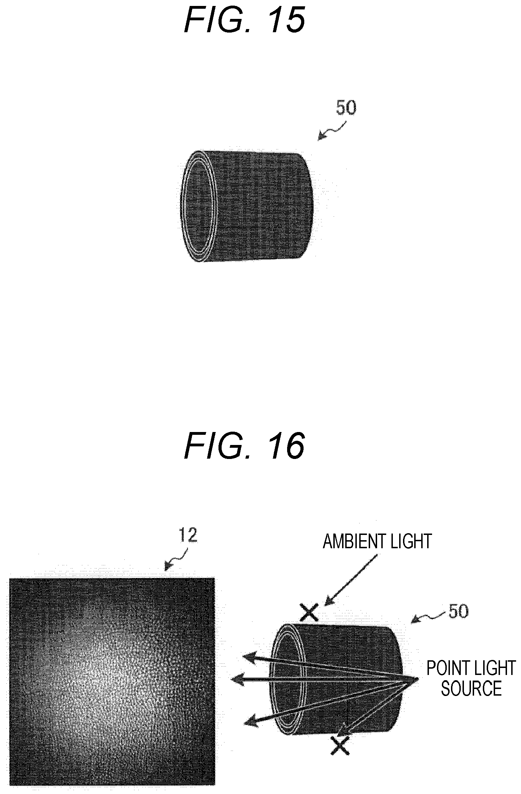

The above point will be described with reference to Fig. 15. Fig. 15 is a view illustrating a structure of a head mount portion 50 according to the third embodiment. The head mount portion 50 illustrated in Fig. 15 includes a plurality of point light sources or apertures provided in a bottom thereof for irradiating the target as in the second embodiment, and a low-reflectance material constituting a side thereof. Note that the low-reflectance material is one of materials constituting the head mount portion 50 and the like, and has relatively low reflectance, such as black glass or black paper.

Fig. 16 illustrates a situation in which the target is irradiated by a point light source. Fig. 16 is a diagram for explaining the situation in which the target is irradiated by the point light source in the third embodiment. As illustrated in Fig. 16, the head mount portion 50 eliminates the influence of the ambient light by the low-reflectance material provided in the side. Note that, although not illustrated, the head mount portion 50 can eliminate the influence of the ambient light also in a case where the target is irradiated by a wide-range light source, as in the example illustrated in Fig. 16.

As described above, in the third embodiment, the ambient light emitted from the outside to the target can be eliminated, and thus the image processing apparatus 100 can perform imaging with little influence of an imaging environment. Note that a processing procedure according to the third embodiment is similar to the procedure illustrated in Fig. 14.

(4. Fourth Embodiment)

Next, a fourth embodiment will be described. The third embodiment shows an example in which the low-reflectance material employed for the side of the head mount portion 50 eliminates the influence of the ambient light. Here, the image processing apparatus 100 may have the head mount portion 50 configured to appropriately take in the ambient light.

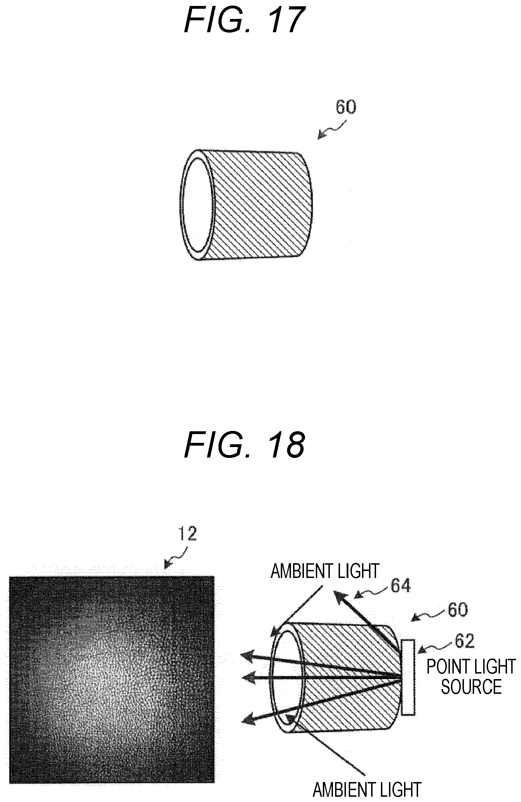

The above point will be described with reference to Fig. 17. Fig. 17 is a view illustrating a structure of a head mount portion 60 according to the fourth embodiment.

The head mount portion 60 illustrated in Fig. 17 includes an aperture provided in a bottom thereof for light to irradiate the target from a light source and a polarizing filter in an emitting direction of the light source, as well as a polarization transmission filter included in a side thereof. In this case, the acquisition section 131 acquires the first image (the point light source image) obtained from the reflected light of the light irradiating the target from the aperture through the polarizing filter and the second image (the wide-range light source image) obtained from the reflected light of ambient light incident after passing through the polarization transmission filter. In this case, the polarizing filter provided at the bottom of the head mount portion 60 and the polarization transmission filter included in the side have an identical polarization direction.

Note that the head mount portion 60 may include a plurality of the apertures provided in the bottom for the light to irradiate the target from the light sources as in the second and third embodiments. In this case, the acquisition section 131 acquires the first image obtained from the reflected light of the light irradiating the target from one of the plurality of apertures through the polarizing filter and the second image obtained from the reflected light of the light irradiating the target from the plurality of apertures through the polarizing filter.

Alternatively, as illustrated in Fig. 12 (b), the head mount portion 60 may further include a plurality of point light sources that irradiates the target instead of the apertures as in the second embodiment and the like. In this case, the acquisition section 131 acquires the second image obtained from the reflected light of the ambient light incident after passing through the polarization transmission filter or the reflected light of the light irradiating the target simultaneously from the plurality of point light sources provided in the head mount portion 60.

The above point will be described with reference to Fig. 18. Fig. 18 is a diagram for explaining a situation in which the target is irradiated by the point light source in the fourth embodiment. As illustrated in Fig. 18, the head mount portion 60 includes a polarizing filter 62 provided at the bottom and the polarization transmission filter included in the side.

As illustrated in Fig. 18, light emitted from the light source 160 of the image processing apparatus 100 irradiates the target through the polarizing filter 62. A part of the polarized light emitted from the inside passes through the polarization transmission filter in the side to the outside. Meanwhile, the ambient light from the outside passes through the side. Note that, although not illustrated, the head mount portion 60 can appropriately take in the ambient light also in a case where the target is irradiated by a wide-range light source, as in the example illustrated in Fig. 18.

As described above, in the fourth embodiment, the image processing apparatus 100 can perform imaging without being affected even under an environment with no surrounding light. In addition, under an environment with light, the image processing apparatus 100 can take in the light. Furthermore, according to the configuration of the fourth embodiment, the light emitted from the inside is transmitted to the outside without being reflected inside the head mount portion 60, and thus the image processing apparatus 100 can cause the point light source irradiation with further eliminated influence of the reflection.

(5. Fifth Embodiment)

Next, a fifth embodiment will be described. The fourth embodiment shows an example in which the polarizing filter 62 provided at the bottom of the head mount portion 60 and the polarization transmission film provided in the side serve to eliminate the influence of the reflection of the internal light source and to let in the ambient light. Here, the image processing apparatus 100 may have the head mount portion 60 that achieves effects similar to those of the fourth embodiment using something other than the polarizing filter 62.

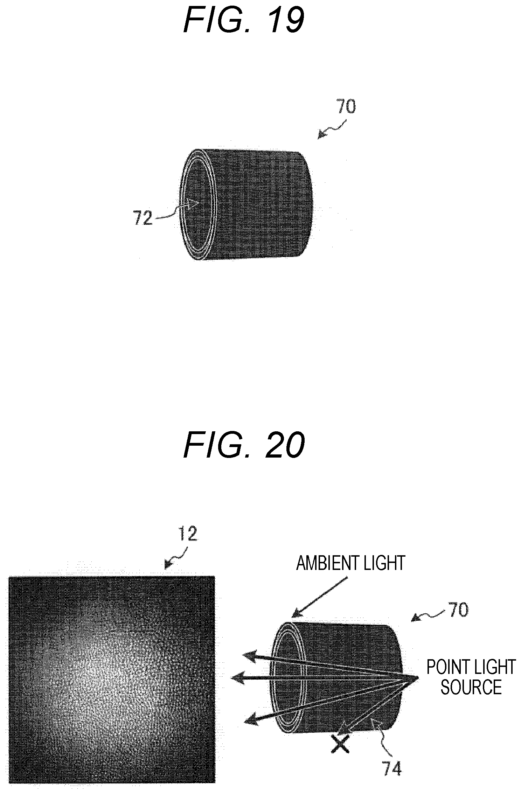

The above point will be described with reference to Fig. 19. Fig. 19 is a view illustrating a structure of a head mount portion 70 according to the fifth embodiment.

The head mount portion 70 illustrated in Fig. 19 includes an aperture provided in a bottom thereof for light to irradiate the target from an infrared light source, and an infrared light absorbing filter 72 included in a side thereof. That is, in the fifth embodiment, the image processing apparatus 100 includes the infrared light source as the light source 160. For example, the image processing apparatus 100 includes an IR light source that emits near infrared rays. Additionally, in this case, the image processing apparatus 100 includes, as the sensor 150, a broadband image sensor having sensitivity in a range from visible light to infrared light.

In such a configuration, IR light emitted from the image processing apparatus 100 is not reflected inside and is absorbed by the infrared light absorbing filter 72 in the side. Meanwhile, a visible light component of the ambient light passes through the infrared light absorbing filter 72 in the side to irradiate the target. In this case, the acquisition section 131 acquires the first image (the point light source image) obtained from the reflected light of the infrared light irradiating the target from the aperture and the second image (the ambient light image) obtained from the reflected light of the ambient light incident after passing through the infrared light absorbing filter 72.

Furthermore, the head mount portion 70 may include a plurality of the apertures provided in the bottom for the light to irradiate the target from the infrared light source. In this case, the acquisition section 131 acquires the first image obtained from the reflected light of the infrared light irradiating the target from one of the plurality of apertures and the second image (the wide-range light source image) obtained from the reflected light of the infrared light irradiating the target from the plurality of apertures.

Alternatively, the head mount portion 70 may further include a plurality of the infrared light sources that irradiates the target instead of the apertures for the infrared light to pass through. In this case, the acquisition section 131 acquires the second image (the ambient light image or the wide-range light source image) obtained from the reflected light of the ambient light incident after passing through the infrared light absorbing filter 72 or the reflected light of the light irradiating the target simultaneously from the plurality of infrared light sources provided in the head mount portion 70.

The above point will be described with reference to Fig. 20. Fig. 20 is a diagram for explaining a situation in which the target is irradiated by the point light source in the fifth embodiment. The head mount portion 70 illustrated in Fig. 20 includes the infrared light absorbing filter 72 included in the side (for example, the inner side of the side).

As illustrated in Fig. 20, infrared light emitted from the light source 160 of the image processing apparatus 100 travels inside the head mount portion 70 to irradiate the target. Infrared light 74 that is a part of the infrared light and is emitted to the side is absorbed by the infrared light absorbing filter 72 in the side. Meanwhile, a visible light component of the ambient light from the outside passes through the side. Note that, although not illustrated, the head mount portion 70 can appropriately take in the ambient light also in a case where the target is irradiated by a wide-range light source, as in the example illustrated in Fig. 20.

As described above, in the fifth embodiment, the image processing apparatus 100 can perform imaging without being affected even under an environment with no surrounding light. In addition, under an environment with light, the image processing apparatus 100 can take in the light. Furthermore, according to the configuration of the fifth embodiment, the light emitted from the inside is transmitted to the outside without being reflected inside the head mount portion 70, and thus the image processing apparatus 100 can cause the point light source irradiation with further eliminated influence of the reflection. Additionally, according to the configuration of the fifth embodiment, the target can be imaged by the infrared light irradiation, and thus it is possible to image the target (output image data of the target) by light other than the visible light component.

(6. Other Embodiments)

The processing according to each embodiment described above may be implemented in various different modes other than the embodiments.

[6-1. Image Processing System]

The above embodiments show an example in which the image processing apparatus 100 includes the sensor 150 and the control section 130 and functions as a standalone microscope. However, the image processing described in each embodiment may be executed not only by the image processing apparatus 100 but also by imaging equipment such as a microscope and an information processing terminal such as a personal computer or a tablet terminal.

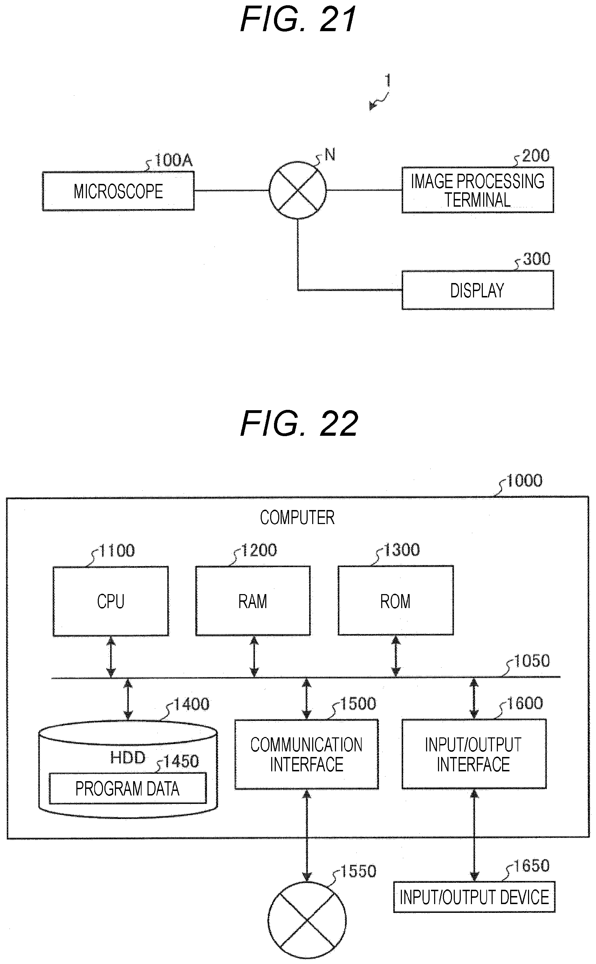

For example, the image processing according to the present disclosure may be executed by an information processing system 1 illustrated in Fig. 21. Fig. 21 is a diagram illustrating a configuration example of the information processing system according to the present disclosure. As illustrated in Fig. 21, the information processing system 1 includes a microscope 100A, an information processing terminal 200, and a display 300. The respective apparatuses constituting the information processing system 1 are connected via a network N in a wired or wireless manner, and transmit and receive information to and from each other.

The microscope 100A is imaging equipment including an image sensor. For example, the microscope 100A includes at least the head mount portion 10, the sensor 150, and the light source 160 in the configuration of the image processing apparatus 100 illustrated in Fig. 10. The user turns the microscope 100A to the target for imaging a state of the surface of the target or the like. The microscope 100A transmits image data obtained by the imaging operation to the information processing terminal 200.

The information processing terminal 200 is an apparatus that executes information processing on the image data transmitted from the microscope 100A. For example, the information processing terminal 200 includes at least the control section 130 and the storage section 120 in the configuration of the image processing apparatus 100 illustrated in Fig. 10. For example, the information processing terminal 200 executes the image processing according to the present disclosure, and generates an image having shape information. Then, the information processing terminal 200 transmits the generated image data to the display 300.

The display 300 is a monitor apparatus that displays the image data transmitted from the information processing terminal 200. For example, the display 300 includes at least the display section 170 in the configuration of the image processing apparatus 100 illustrated in Fig. 10.

As described above, the image processing according to the present disclosure may be executed by the information processing system 1 including the respective apparatuses, instead of being executed by the standalone image processing apparatus 100. That is, the image processing according to the present disclosure can also be realized by various flexible apparatus configurations.

[6-2. Head Mount Portion]

Each embodiment described above shows an example in which the head mount portion is a cylindrical portion mounted on the tip of the image processing apparatus 100. However, the head mount portion may have another structure for keeping the distance between the target and the sensor 150 of the image processing apparatus 100 constant, and does not necessarily have a cylindrical shape.

Furthermore, in the third to fifth embodiments, the material constituting the head mount portion has been described, but is not limited to those described above. For example, the head mount portion may have another configuration that hardly reflects the light emitted from the inside to the target and lets the ambient light from the outside pass through, and does not have to employ the material or the configuration as described in the fourth and fifth embodiments.

[6-3. Others]

In the processing described in the above embodiments, all or a part of the processing described as being automatically performed can be manually performed, or all or a part of the processing described as being manually performed can be automatically performed by a publicly known method. In addition, processing procedures, specific names, and information including various types of data and parameters shown in the document and the drawings can be arbitrarily changed unless otherwise specified. For example, the various information illustrated in the drawings is not limited to the illustrated information.

Furthermore, each constituent element of the respective apparatuses illustrated in the drawings is functionally conceptual. The apparatuses are not necessarily physically configured as illustrated in the drawings. That is, a specific mode of distribution and integration of the respective apparatuses is not limited to the illustrated mode, and all or a part of the apparatuses can be functionally or physically distributed and integrated in an arbitrary unit depending on various loads, usage conditions, and the like.

Additionally, the above-described embodiments and modified examples can be appropriately combined within the consistency of the processing details. Furthermore, in the embodiments, the microscope has been described as an example of the image processing apparatus. However, the image processing of the present disclosure is also applicable to imaging equipment other than the microscope.

Note that the effects described in the present specification are merely examples and are not limitations, and another effect may be achieved.

(7. Effects of Image Processing Apparatus According to Present Disclosure)

As described above, the image processing apparatus according to the present disclosure (the image processing apparatus 100 in the embodiments) has a cylindrical portion (the head mount portion 10 etc. in the embodiments) placed between a sensor (the sensor 150 in the embodiments) configured to capture an image of a target and the target, an acquisition section (the acquisition section 131 in the embodiments), and a calculation section (the calculation section 132 in the embodiments). The acquisition section acquires a first image (the point light source image in the embodiments) obtained from reflected light of light irradiating the target from a point light source and a second image (the ambient light image or the wide-range light source image in the embodiments) obtained from reflected light of light irradiating the target from a light source other than the point light source. The calculation section calculates shape information that is information regarding a surface shape of the target on the basis of a length of the cylindrical portion, the first image, and the second image.

As described above, the image processing apparatus according to the present disclosure calculates the shape information of the target on the basis of the first image obtained from the point light source and the second image obtained from the light source other than the point light source, such as the ambient light. As a result, the image processing apparatus, even having an equipment configuration like a microscope that normally obtains only planar information, can perform highly accurate shape measurement with the simple configuration.

Furthermore, the cylindrical portion includes a first aperture provided in a bottom of the cylindrical portion for the light to irradiate the target from a light source, and a second aperture provided in a side of the cylindrical portion. The acquisition section acquires the first image obtained from the reflected light of the light irradiating the target from the first aperture and the second image obtained from the reflected light of ambient light incident from the second aperture. That is, the image processing apparatus includes the aperture in the side instead of having a general sealed tip head (a cylindrical portion of which all faces are constituted by a low-transmittance material such as plastic), and thus can efficiently take in the ambient light.

Furthermore, the cylindrical portion includes the point light source that irradiates the target, and an aperture provided in a side of the cylindrical portion. The acquisition section acquires the first image obtained from the reflected light of the light irradiating the target from the point light source provided in the cylindrical portion and the second image obtained from the reflected light of ambient light incident from the aperture. This configuration allows the image processing apparatus to cause the point light source to appropriately irradiate the target, and thus to obtain the point light source image with high accuracy.

Furthermore, the cylindrical portion includes a plurality of apertures provided at substantially the same intervals in the side. This configuration allows the image processing apparatus to obtain the ambient light image by balanced ambient light irradiation.

Furthermore, the cylindrical portion includes a plurality of apertures provided in a bottom of the cylindrical portion for the light to irradiate the target from a light source. The acquisition section acquires the first image obtained from the reflected light of the light irradiating the target from one of the plurality of apertures and the second image obtained from the reflected light of the light irradiating the target from the plurality of apertures. This configuration allows the image processing apparatus to obtain the second image in which the target is irradiated by uniform light regardless of the surrounding environment.

Furthermore, the cylindrical portion includes a plurality of the point light sources that irradiates the target. The acquisition section acquires the first image obtained from the reflected light of the light irradiating the target from one of the point light sources provided in the cylindrical portion and the second image obtained from the reflected light of the light irradiating the target simultaneously from the plurality of point light sources provided in the cylindrical portion. This configuration allows the image processing apparatus to obtain the second image in which the target is irradiated by uniform light regardless of the surrounding environment.

Furthermore, the cylindrical portion includes the plurality of point light sources that irradiates the target, and a low-reflectance material constituting a side of the cylindrical portion. This configuration allows the image processing apparatus to appropriately execute the image processing according to the present disclosure even under an environment unsuitable for imaging where, for example, the surroundings are too bright.

Furthermore, the cylindrical portion includes an aperture provided in a bottom of the cylindrical portion for the light to irradiate the target from a light source, a polarizing filter provided in an emitting direction of the light source, and a polarization transmission filter included in a side of the cylindrical portion. The acquisition section acquires the first image obtained from the reflected light of the light irradiating the target from the aperture through the polarizing filter and the second image obtained from the reflected light of ambient light incident after passing through the polarization transmission filter. This configuration allows the image processing apparatus to appropriately take in the ambient light while suppressing reflection of the point light source, and thus to perform the image processing appropriately.

Furthermore, the cylindrical portion includes a plurality of the apertures provided in the bottom for the light to irradiate the target from the light source. The acquisition section acquires the first image obtained from the reflected light of the light irradiating the target from one of the plurality of apertures through the polarizing filter and the second image obtained from the reflected light of the light irradiating the target from the plurality of apertures through the polarizing filter. This configuration allows the image processing apparatus to obtain the second image in which the target is irradiated by uniform light regardless of the surrounding environment.

Furthermore, the cylindrical portion further includes a plurality of the point light sources that irradiates the target. The acquisition section acquires the second image obtained from the reflected light of the ambient light incident after passing through the polarization transmission filter or the reflected light of the light irradiating the target simultaneously from the plurality of point light sources provided in the cylindrical portion. This configuration allows the image processing apparatus to perform the image processing flexibly, for example, by using the ambient light under an environment suitable for imaging and by using the provided light sources under an environment unsuitable for imaging.

Furthermore, the cylindrical portion includes an aperture provided in a bottom of the cylindrical portion for the light to irradiate the target from an infrared light source, and an infrared light absorbing filter included in a side of the cylindrical portion. The acquisition section acquires the first image obtained from the reflected light of infrared light irradiating the target from the aperture and the second image obtained from the reflected light of ambient light incident after passing through the infrared light absorbing filter. This configuration allows the image processing apparatus to appropriately take in the ambient light while suppressing reflection of the point light source, and thus to perform the image processing appropriately.

Furthermore, the cylindrical portion includes a plurality of apertures provided in the bottom for the light to irradiate the target from the infrared light source. The acquisition section acquires the first image obtained from the reflected light of the infrared light irradiating the target from one of the plurality of apertures and the second image obtained from the reflected light of infrared light irradiating the target from the plurality of apertures. This configuration allows the image processing apparatus to obtain the second image in which the target is irradiated by uniform light regardless of the surrounding environment.

Furthermore, the cylindrical portion further includes a plurality of the infrared light sources that irradiates the target. The acquisition section acquires the second image obtained from the reflected light of the ambient light incident after passing through the infrared light absorbing filter or the reflected light of the light irradiating the target simultaneously from the plurality of infrared light sources provided in the cylindrical portion. This configuration allows the image processing apparatus to perform the image processing flexibly, for example, by using the ambient light under an environment suitable for imaging and by using the provided light sources under an environment unsuitable for imaging.

Furthermore, the image processing apparatus further includes an image generation section (the image generation section 133 in the embodiments) configured to generate an image including the calculated shape information. This configuration allows the image processing apparatus to provide the user with the image including the shape information.

(8. Hardware Configuration)

Information equipment such as the image processing apparatus 100 according to each embodiment described above is realized by a computer 1000 having a configuration as illustrated in Fig. 22, for example. Hereinafter, an explanation will be given by citing the image processing apparatus 100 according to the embodiments as an example.

Fig. 22 is a hardware configuration diagram illustrating an example of the computer 1000 that realizes the functions of the image processing apparatus 100. The computer 1000 includes a CPU 1100, a RAM 1200, a read only memory (ROM) 1300, a hard disk drive (HDD) 1400, a communication interface 1500, and an input/output interface 1600. The portions of the computer 1000 are connected by a bus 1050.

The CPU 1100 operates on the basis of a program stored in the ROM 1300 or the HDD 1400, and controls each portion. For example, the CPU 1100 loads programs stored in the ROM 1300 or the HDD 1400 into the RAM 1200, and executes processing corresponding to the various programs.

The ROM 1300 stores a boot program such as a basic input output system (BIOS) executed by the CPU 1100 when the computer 1000 is activated, a hardware dependent program of the computer 1000, and the like.

The HDD 1400 is a computer-readable recording medium for non-temporarily recording a program to be executed by the CPU 1100, data used by that program, and the like. Specifically, the HDD 1400 is a recording medium for recording the image processing program according to the present disclosure. The image processing program is an example of program data 1450.

The communication interface 1500 is an interface for connecting the computer 1000 with an external network 1550 (for example, the Internet). For example, the CPU 1100 receives data from another equipment and transmits data generated by the CPU 1100 to another equipment via the communication interface 1500.

The input/output interface 1600 is an interface for connecting the computer 1000 with an input/output device 1650. For example, the CPU 1100 receives data from an input device such as a keyboard or a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded in a predetermined recording medium. The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the image processing apparatus 100 according to the embodiments, the CPU 1100 of the computer 1000 realizes the functions of the control section 130 and the like by executing the image processing program loaded in the RAM 1200. Furthermore, the HDD 1400 stores the image processing program according to the present disclosure and the data held in the storage section 120. Note that the CPU 1100 reads the program data 1450 from the HDD 1400 to execute programs, but in another example, may acquire these programs from another apparatus via the external network 1550.

Additionally, the present technology can also be configured as follows.

(1) An image processing apparatus having a cylindrical portion placed between a sensor configured to capture an image of a target and the target, the image processing apparatus including:

an acquisition section configured to acquire a first image obtained from reflected light of light irradiating the target from a point light source and a second image obtained from reflected light of light irradiating the target from a light source other than the point light source; and
a calculation section configured to calculate shape information that is information regarding a surface shape of the target on the basis of a length of the cylindrical portion, the first image, and the second image.

(2) The image processing apparatus according to (1), in which

the cylindrical portion includes
a first aperture provided in a bottom of the cylindrical portion for the light to irradiate the target from a light source, and a second aperture provided in a side of the cylindrical portion, and
the acquisition section
acquires the first image obtained from the reflected light of the light irradiating the target from the first aperture and the second image obtained from the reflected light of ambient light incident from the second aperture.

(3) The image processing apparatus according to (1) or (2), in which

the cylindrical portion includes
the point light source that irradiates the target, and an aperture provided in a side of the cylindrical portion, and
the acquisition section
acquires the first image obtained from the reflected light of the light irradiating the target from the point light source provided in the cylindrical portion and the second image obtained from the reflected light of ambient light incident from the aperture.

(4) The image processing apparatus according to (2) or (3), in which

the cylindrical portion includes
a plurality of apertures provided at substantially same intervals in the side.

(5) The image processing apparatus according to any one of (1) to (4), in which

the cylindrical portion includes
a plurality of apertures provided in a bottom of the cylindrical portion for the light to irradiate the target from a light source, and
the acquisition section
acquires the first image obtained from the reflected light of the light irradiating the target from one of the plurality of apertures and the second image obtained from the reflected light of the light irradiating the target from the plurality of apertures.

(6) The image processing apparatus according to any one of (1) to (5), in which

the cylindrical portion includes
a plurality of the point light sources that irradiates the target, and
the acquisition section
acquires the first image obtained from the reflected light of the light irradiating the target from one of the point light sources provided in the cylindrical portion and the second image obtained from the reflected light of the light irradiating the target simultaneously from the plurality of point light sources provided in the cylindrical portion.

(7) The image processing apparatus according to (6), in which

the cylindrical portion includes
the plurality of point light sources that irradiates the target, and a low-reflectance material constituting a side of the cylindrical portion.

(8) The image processing apparatus according to any one of (1) to (7), in which

the cylindrical portion includes
an aperture provided in a bottom of the cylindrical portion for the light to irradiate the target from a light source, a polarizing filter provided in an emitting direction of the light source, and a polarization transmission filter included in a side of the cylindrical portion, and
the acquisition section
acquires the first image obtained from the reflected light of the light irradiating the target from the aperture through the polarizing filter and the second image obtained from the reflected light of ambient light incident after passing through the polarization transmission filter.

(9) The image processing apparatus according to (8), in which

the cylindrical portion includes
a plurality of the apertures provided in the bottom for the light to irradiate the target from the light source, and
the acquisition section
acquires the first image obtained from the reflected light of the light irradiating the target from one of the plurality of apertures through the polarizing filter and the second image obtained from the reflected light of the light irradiating the target from the plurality of apertures through the polarizing filter.

(10) The image processing apparatus according to (8) or (9), in which

the cylindrical portion further includes
a plurality of the point light sources that irradiates the target, and
the acquisition section
acquires the second image obtained from the reflected light of the ambient light incident after passing through the polarization transmission filter or the reflected light of the light irradiating the target simultaneously from the plurality of point light sources provided in the cylindrical portion.

(11) The image processing apparatus according to any one of (1) to (10), in which

the cylindrical portion includes

an aperture provided in a bottom of the cylindrical portion for the light to irradiate the target from an infrared light source, and an infrared light absorbing filter included in a side of the cylindrical portion, and the acquisition section

acquires the first image obtained from the reflected light of infrared light irradiating the target from the aperture and the second image obtained from the reflected light of ambient light incident after passing through the infrared light absorbing filter.

(12) The image processing apparatus according to (11), in which

the cylindrical portion includes

a plurality of the apertures provided in the bottom for the light to irradiate the target from the infrared light source, and

the acquisition section

acquires the first image obtained from the reflected light of the infrared light irradiating the target from one of the plurality of apertures and the second image obtained from the reflected light of infrared light irradiating the target from the plurality of apertures.

(13) The image processing apparatus according to (11) or (12), in which

the cylindrical portion further includes

a plurality of the infrared light sources that irradiates the target, and

the acquisition section

acquires the second image obtained from the reflected light of the ambient light incident after passing through the infrared light absorbing filter or the reflected light of the light irradiating the target simultaneously from the plurality of infrared light sources provided in the cylindrical portion.

(14) The image processing apparatus according to any one of (1) to (13), further including:
an image generation section configured to generate an image including the calculated shape information.
(15) An image processing method including:

by an image processing apparatus having a cylindrical portion placed between a sensor configured to capture an image of a target and the target,

acquiring a first image obtained from reflected light of light irradiating the target from a point light source and a second image obtained from reflected light of light irradiating the target from a light source other than the point light source; and

calculating shape information that is information regarding a surface shape of the target on the basis of a length of the cylindrical portion, the first image, and the second image.

(16) An image processing program for causing an image processing apparatus having a cylindrical portion placed between a sensor configured to capture an image of a target and the target to function as:

an acquisition section that acquires a first image obtained from reflected light of light irradiating the target from a point light source and a second image obtained from reflected light of light irradiating the target from a light source other than the point light source; and

a calculation section that calculates shape information that is information regarding a surface shape of the target on the basis of a length of the cylindrical portion, the first image, and the second image.

REFERENCE SIGNS LIST

| 10 | Head mount portion |
| 100 | Image processing apparatus |
| 120 | Storage section |
| 130 | Control section |

131 Acquisition section
132 Calculation section
133 Image generation section
134 Output section
150 Sensor
160 Light source
170 Display section

**Claims**

1. An image processing apparatus having a cylindrical portion placed between a sensor configured to capture an image of a target and the target, the image processing apparatus comprising:

   an acquisition section configured to acquire a first image obtained from reflected light of light irradiating the target from a point light source and a second image obtained from reflected light of light irradiating the target from a light source other than the point light source; and
   a calculation section configured to calculate shape information that is information regarding a surface shape of the target on a basis of a length of the cylindrical portion, the first image, and the second image.

2. The image processing apparatus according to claim 1, wherein

   the cylindrical portion includes
   a first aperture provided in a bottom of the cylindrical portion for the light to irradiate the target from a light source, and a second aperture provided in a side of the cylindrical portion, and
   the acquisition section
   acquires the first image obtained from the reflected light of the light irradiating the target from the first aperture and the second image obtained from the reflected light of ambient light incident from the second aperture.

3. The image processing apparatus according to claim 1, wherein

   the cylindrical portion includes
   the point light source that irradiates the target, and an aperture provided in a side of the cylindrical portion, and
   the acquisition section
   acquires the first image obtained from the reflected light of the light irradiating the target from the point light source provided in the cylindrical portion and the second image obtained from the reflected light of ambient light incident from the aperture.

4. The image processing apparatus according to claim 2, wherein

   the cylindrical portion includes
   a plurality of apertures provided at substantially same intervals in the side.

5. The image processing apparatus according to claim 1, wherein

   the cylindrical portion includes
   a plurality of apertures provided in a bottom of the cylindrical portion for the light to irradiate the target from a light source, and
   the acquisition section
   acquires the first image obtained from the reflected light of the light irradiating the target from one of the plurality of apertures and the second image obtained from the reflected light of the light irradiating the target from the plurality of apertures.

6. The image processing apparatus according to claim 1, wherein

   the cylindrical portion includes
   a plurality of the point light sources that irradiates the target, and
   the acquisition section

acquires the first image obtained from the reflected light of the light irradiating the target from one of the point light sources provided in the cylindrical portion and the second image obtained from the reflected light of the light irradiating the target simultaneously from the plurality of point light sources provided in the cylindrical portion.

7. The image processing apparatus according to claim 6, wherein

the cylindrical portion includes
the plurality of point light sources that irradiates the target, and a low-reflectance material constituting a side of the cylindrical portion.

8. The image processing apparatus according to claim 1, wherein

the cylindrical portion includes
an aperture provided in a bottom of the cylindrical portion for the light to irradiate the target from a light source, a polarizing filter provided in an emitting direction of the light source, and a polarization transmission filter included in a side of the cylindrical portion, and
the acquisition section
acquires the first image obtained from the reflected light of the light irradiating the target from the aperture through the polarizing filter and the second image obtained from the reflected light of ambient light incident after passing through the polarization transmission filter.

9. The image processing apparatus according to claim 8, wherein

the cylindrical portion includes
a plurality of the apertures provided in the bottom for the light to irradiate the target from the light source, and
the acquisition section
acquires the first image obtained from the reflected light of the light irradiating the target from one of the plurality of apertures through the polarizing filter and the second image obtained from the reflected light of the light irradiating the target from the plurality of apertures through the polarizing filter.

10. The image processing apparatus according to claim 8, wherein

the cylindrical portion further includes
a plurality of the point light sources that irradiates the target, and
the acquisition section
acquires the second image obtained from the reflected light of the ambient light incident after passing through the polarization transmission filter or the reflected light of the light irradiating the target simultaneously from the plurality of point light sources provided in the cylindrical portion.

11. The image processing apparatus according to claim 1, wherein

the cylindrical portion includes
an aperture provided in a bottom of the cylindrical portion for the light to irradiate the target from an infrared light source, and an infrared light absorbing filter included in a side of the cylindrical portion, and
the acquisition section
acquires the first image obtained from the reflected light of infrared light irradiating the target from the aperture and the second image obtained from the reflected light of ambient light incident after passing through the infrared light absorbing filter.

12. The image processing apparatus according to claim 11, wherein

the cylindrical portion includes
a plurality of the apertures provided in the bottom for the light to irradiate the target from the infrared light source, and
the acquisition section
acquires the first image obtained from the reflected light of the infrared light irradiating the target from one of the plurality of apertures and the second image obtained from the reflected light of infrared light irradiating the target from the plurality of apertures.

20

**13.** The image processing apparatus according to claim 11, wherein

the cylindrical portion further includes
a plurality of the infrared light sources that irradiates the target, and
the acquisition section
acquires the second image obtained from the reflected light of the ambient light incident after passing through the infrared light absorbing filter or the reflected light of the light irradiating the target simultaneously from the plurality of infrared light sources provided in the cylindrical portion.

**14.** The image processing apparatus according to claim 1, further comprising:
an image generation section configured to generate an image including the calculated shape information.

**15.** An image processing method comprising:

by an image processing apparatus having a cylindrical portion placed between a sensor configured to capture an image of a target and the target,
acquiring a first image obtained from reflected light of light irradiating the target from a point light source and a second image obtained from reflected light of light irradiating the target from a light source other than the point light source; and
calculating shape information that is information regarding a surface shape of the target on a basis of a length of the cylindrical portion, the first image, and the second image.

**16.** An image processing program for causing an image processing apparatus having a cylindrical portion placed between a sensor configured to capture an image of a target and the target to function as:

an acquisition section that acquires a first image obtained from reflected light of light irradiating the target from a point light source and a second image obtained from reflected light of light irradiating the target from a light source other than the point light source; and
a calculation section that calculates shape information that is information regarding a surface shape of the target on a basis of a length of the cylindrical portion, the first image, and the second image.

# FIG. 1

*FIG. 2*

EP 3 951 312 A1

# FIG. 3

# FIG. 4

# FIG. 5

12

AMBIENT LIGHT

10

POINT LIGHT
SOURCE

AMBIENT LIGHT

# FIG. 6

14

AMBIENT LIGHT

10

AMBIENT LIGHT

## FIG. 7

IMAGING TARGET → IMAGE ACQUISITION PROCESSING (S11) → POINT LIGHT SOURCE IMAGE / AMBIENT LIGHT IMAGE → BRDF Fitting PROCESSING (S12) → SURFACE NORMAL → DISTANCE CALCULATION PROCESSING (S13) → DISTANCE (Depth) → 18

CAMERA PARAMETER

HEAD MOUNT LENGTH

OTHER INFORMATION
* DIFFUSE ALBEDO
* SPECULAR ALBEDO
* ANISOTROPY
* GLOSS

# FIG. 8

DISTANCE CALCULATION PROCESSING

CAMERA PARAMETER

HEAD MOUNT LENGTH

18

NORMAL LINE INFORMATION → Height Map GENERATION PROCESSING S13A — Height → Depth CONVERSION PROCESSING S13B — DISTANCE (Depth) →

# FIG. 9

30

ΔZ

Z

32

f

34

Δh

Δp

# FIG. 10

IMAGE PROCESSING APPARATUS 〜100

CONTROL SECTION 〜130

IMAGING TARGET → HEAD MOUNT PORTION 〜10 ←→ ACQUISITION SECTION 〜131 ←→ SENSOR 〜150

DISPLAY SECTION 〜170 ←→ CALCULATION SECTION 〜132 ←→ LIGHT SOURCE 〜160

IMAGE GENERATION SECTION 〜133

OUTPUT SECTION 〜134 ←→ STORAGE SECTION 〜120

28

# FIG. 11

```
                    ┌─────────────┐
                    │    START    │
                    └──────┬──────┘
          ┌────────────────│
          │                ▼
          │          ╱───────────────╲        ⌇S101
        No│         ╱ HAS IMAGING     ╲
          │        ⟨  OPERATION BEEN    ⟩
          │         ╲ RECEIVED?        ╱
          │          ╲───────────────╱
          │                │ Yes
          │                ▼              ⌇S102
          │       ┌───────────────────────┐
          │       │    ADJUST EXPOSURE    │
          │       └───────────┬───────────┘
          │                   ▼              ⌇S103
          │       ┌───────────────────────┐
          │       │ ACQUIRE IMAGE BY       │
          │       │ AMBIENT LIGHT          │
          │       └───────────┬───────────┘
          │                   ▼              ⌇S104
          │       ┌───────────────────────┐
          │       │ TURN ON POINT LIGHT    │
          │       │ SOURCE                 │
          │       └───────────┬───────────┘
          │                   ▼              ⌇S105
          │       ┌───────────────────────┐
          │       │    ADJUST EXPOSURE    │
          │       └───────────┬───────────┘
          │                   ▼              ⌇S106
          │       ┌───────────────────────┐
          │       │ ACQUIRE IMAGE BY       │
          │       │ POINT LIGHT SOURCE     │
          │       └───────────┬───────────┘
          │                   ▼              ⌇S107
          │       ┌───────────────────────┐
          │       │ TURN OFF POINT LIGHT   │
          │       │ SOURCE                 │
          │       └───────────┬───────────┘
          │                   ▼              ⌇S108
          │       ┌───────────────────────┐
          │       │ CALCULATE SHAPE FROM   │
          │       │ TWO IMAGES             │
          │       └───────────┬───────────┘
          │                   ▼              ⌇S109
          │       ┌───────────────────────┐
          │       │ GENERATE AND OUTPUT    │
          │       │ IMAGE RELATED TO SHAPE │
          │       │ ON THE BASIS OF        │
          │       │ CALCULATION RESULT     │
          │       └───────────┬───────────┘
                              ▼
                       ┌─────────────┐
                       │     END     │
                       └─────────────┘
```

# FIG. 12

(a)

(b)

# FIG. 13

48

40

WIDE-RANGE
LIGHT SOURCE

# FIG. 14

```
                    ┌─────────────┐
                    │    START    │
                    └─────────────┘
                           │
         ┌─────────────────▼─────────────────┐
    No   ◇        HAS IMAGING OPERATION       ◇  S201
  ┌──────┤          BEEN RECEIVED?            │
  │      └─────────────────┬─────────────────┘
  │                        │ Yes
  │      ┌─────────────────▼─────────────────┐  S202
  │      │   TURN ON WIDE-RANGE LIGHT SOURCE  │
  │      └─────────────────┬─────────────────┘
  │                        │                    S203
  │      ┌─────────────────▼─────────────────┐
  │      │          ADJUST EXPOSURE          │
  │      └─────────────────┬─────────────────┘
  │                        │                    S204
  │      ┌─────────────────▼─────────────────┐
  │      │ ACQUIRE IMAGE BY WIDE-RANGE LIGHT SOURCE │
  │      └─────────────────┬─────────────────┘
  │                        │                    S205
  │      ┌─────────────────▼─────────────────┐
  │      │   TURN OFF WIDE-RANGE LIGHT SOURCE │
  │      └─────────────────┬─────────────────┘
  │                        │                    S206
  │      ┌─────────────────▼─────────────────┐
  │      │       TURN ON POINT LIGHT SOURCE   │
  │      └─────────────────┬─────────────────┘
  │                        │                    S207
  │      ┌─────────────────▼─────────────────┐
  │      │          ADJUST EXPOSURE          │
  │      └─────────────────┬─────────────────┘
  │                        │                    S208
  │      ┌─────────────────▼─────────────────┐
  │      │  ACQUIRE IMAGE BY POINT LIGHT SOURCE │
  │      └─────────────────┬─────────────────┘
  │                        │                    S209
  │      ┌─────────────────▼─────────────────┐
  │      │      TURN OFF POINT LIGHT SOURCE   │
  │      └─────────────────┬─────────────────┘
  │                        │                    S210
  │      ┌─────────────────▼─────────────────┐
  │      │   CALCULATE SHAPE FROM TWO IMAGES  │
  │      └─────────────────┬─────────────────┘
  │                        │                    S211
  │      ┌─────────────────▼─────────────────┐
  │      │ GENERATE AND OUTPUT IMAGE RELATED TO SHAPE │
  │      │   ON THE BASIS OF CALCULATION RESULT │
  │      └─────────────────┬─────────────────┘
  │                        │
                    ┌──────▼──────┐
                    │     END     │
                    └─────────────┘
```

## FIG. 15

## FIG. 16

# FIG. 17

60

# FIG. 18

12

AMBIENT LIGHT

64

60

62

POINT LIGHT
SOURCE

AMBIENT LIGHT

# FIG. 19

# FIG. 20

# FIG. 21

1

| 100A | | N | | 200 |
|---|---|---|---|---|
| MICROSCOPE | | ⊗ | | IMAGE PROCESSING TERMINAL |

300

DISPLAY

# FIG. 22

1000

COMPUTER

| 1100 | 1200 | 1300 |
|---|---|---|
| CPU | RAM | ROM |

1050

| 1400 | 1500 | 1600 |
|---|---|---|
| HDD 1450 | COMMUNICATION INTERFACE | INPUT/OUTPUT INTERFACE |
| PROGRAM DATA | | |

1550
⊗

1650
INPUT/OUTPUT DEVICE

**INTERNATIONAL SEARCH REPORT**

| International application No. |
| --- |
| PCT/JP2020/012131 |

A. CLASSIFICATION OF SUBJECT MATTER
G01B 11/24(2006.01)i; G01B 11/30(2006.01)i; G06T 7/586(2017.01)i
FI: G01B11/24 K; G06T7/586; G01B11/30 A

According to International Patent Classification (IPC) or to both national classification and IPC

B. FIELDS SEARCHED

Minimum documentation searched (classification system followed by classification symbols)
G01B11/24; G01B11/30; G06T7/586

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2013-543591 A (OMRON CORP.) 05.12.2013 (2013-12-05) | 1-16 |
| A | JP 2012-248183 A (TOSHIBA CORP.) 13.12.2012 (2012-12-13) | 1-16 |
| A | JP 11-308496 A (MORITEX CORP.) 05.11.1999 (1999-11-05) | 1-16 |

☐ Further documents are listed in the continuation of Box C. ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 June 2020 (05.06.2020) | 16 June 2020 (16.06.2020) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

| INTERNATIONAL SEARCH REPORT | | International application No. | |
|---|---|---|---|
| Information on patent family members | | PCT/JP2020/012131 | |

| Patent Documents referred in the Report | Publication Date | Patent Family | Publication Date |
|---|---|---|---|
| JP 2013-543591 A | 05 Dec. 2013 | US 2012/0086950 A1 | |
| JP 2012-248183 A | 13 Dec. 2012 | US 2012/0287247 A1 | |
| JP 11-308496 A | 05 Nov. 1999 | US 6118476 A | |

Form PCT/ISA/210 (patent family annex) (January 2015)

**EP 3 951 312 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10333057 A

- JP 2008253498 A

**Non-patent literature cited in the description**

- **MIIKA AITTALA.** Two-Shot SVBRDF Capture for Stationary Materials. *SIGGRAPH,* 2015